# EUROPEAN PATENT APPLICATION

(11) **EP 4 202 844 A1**
(43) Date of publication of application: **28.06.2023**
(21) Application number: 21216669.8
(22) Date of filing: 21.12.2021
(51) Int. Cl.: G06T 15/50

(54) **3D DESIGN DEVELOPMENT AND DISPLAY**

(71) Applicant: The West Retail Group Limited, Barton-upon-Humber North Lincolnshire DN18 5RL (GB)
(72) Inventor: Fisher, Katherine, Barton On Humber DN18 5RX (GB); Maddock-Greene, Hector, Barton On Humber DN18 5RX (GB); Dixon, Michael, Barton On Humber DN18 5RX (GB); Lord, Kevin, Barton On Humber DN18 5RX (GB)
(74) Representative: Haseltine Lake Kempner LLP

(57) **Abstract**

A 3D design application configured to handle a representation of a design, wherein: the representation is a 3D data representation defining a 3D environment comprising at least one 3D model; and the 3D design application is configured, at runtime, to: export geometric data, or geometric data and material data, describing the 3D environment and/or the at least one 3D model to a lightmapping application, the lightmapping application configured to generate lighting data for application to said at least one 3D model; and import the lighting data and apply lighting to said at least one 3D model based on the lighting data.

## Description

The present invention relates to design development and display, in particular where the design is of a room such as a kitchen. The present invention relates to associated computer systems, methods and software.

### BACKGROUND

The process of designing a room of a building, such as a kitchen, includes making selections of several different types of component often from a great number of options, along with deciding how to arrange those components relative to one another. The process may involve the initial specification of a 'baseline' room layout, comprising selecting, configuring and positioning components such as walls, room fixtures, such as doors, windows and utility inlets. The process may involve selecting, configuring and positioning components to add to a baseline room layout such as wall units, floor units, worktops, frontals and appliances. These are of course just examples.

Increasingly, it is desirable to display a design to a user, such as a designer and/or a customer, as the design is being developed or once the design is complete. Three-dimensional (3D) technologies, including virtual reality (VR) and augmented reality (AR), improve the user experience when viewing a design which is under development or complete.

Another factor is the increasing need for multiple instances of a design system to be kept consistent with one another, so that multiple users receive a consistent service.

It is desirable to provide improved design development and/or display systems, methods and software in the light of the above.

### SUMMARY

According to an embodiment of a first aspect of the present disclosure, there is provided a computing system for design development comprising at least one computer, wherein: a browser is configured to run on a given computer of the system as a native application of said given computer; a first design application is configured to run within the browser and handle a representation of a first design; a second design application is configured to run on said given computer or on another computer of the system as a native application of the computer concerned and handle a representation of a second design; at least one of the first and second design applications is configured, at runtime and in real time as a user of that one of those applications updates the representation of the design of that one of those applications to update that design, to communicate the update via a server to the other one of those applications; and at least the other one of the first and second design applications is configured, at runtime and in real time as the update is received, to apply the update to the representation of the design of that other one of those applications to update that design.

According to an embodiment of a second aspect of the present disclosure, there is provided a suite of computer programs for design development, the suite comprising: a first design application configured to run within a browser and handle a representation of a first design; and a second design application configured to run as a native application of a computer and handle a representation of a second design, wherein: at least one of the first and second design applications is configured, at runtime and in real time as a user of that one of those applications updates the representation of the design of that one of those applications to update that design, to communicate the update via a server to the other one of those applications; and at least the other one of the first and second design applications is configured, at runtime and in real time as the update is received, to apply the update to the representation of the design of that other one of those applications to update that design.

According to an embodiment of a third aspect of the present disclosure, there is provided a computer readable medium having the suite of computer programs of the aforementioned second aspect stored thereon.

According to an embodiment of a fourth aspect of the present disclosure, there is provided a computer-implemented method for design development, comprising: running a browser on a given computer of a system as a native application of said given computer; running a first design application within the browser, the first design application configured to handle a representation of a first design; running a second design application on said given computer or on another computer of the system as a native application of the computer concerned, the second design application configured to handle a representation of a second design; employing at least one of the first and second design applications, at runtime and in real time as a user of that one of those applications updates the representation of the design of that one of those applications to update that design, to communicate the update via a server to the other one of those applications; and employing at least the other one of the first and second design applications, at runtime and in real time as the update is received, to apply the update to the representation of the design of that other one of those applications to update that design.

According to an embodiment of a fifth aspect of the present disclosure, there is provided a 3D design application configured to handle a representation of a design, wherein: the representation is a 3D data representation defining a 3D environment comprising at least one 3D model; and the 3D design application is configured, at runtime, to: export geometric data, or geometric data and material data, describing the 3D environment and/or the at least one 3D model to a lightmapping application, the lightmapping application configured to generate lighting data for application to said at least one 3D model; and import the lighting data and apply lighting to said at least one 3D model based on the lighting data.

According to an embodiment of a sixth aspect of the present disclosure, there is provided a 3D design system comprising computing apparatus configured to run the 3D design application according to the aforementioned fifth aspect.

According to an embodiment of a seventh aspect of the present disclosure, there is provided a computer readable medium having the 3D design application according to the aforementioned fifth aspect stored thereon.

According to an embodiment of an eighth aspect of the present disclosure, there is provided a computer-implemented method of handling a representation of a design, wherein the representation is a 3D data representation defining a 3D environment comprising at least one 3D model, the method comprising, at runtime,: exporting geometric data, or geometric data and material data, describing the 3D environment and/or the at least one 3D model to a lightmapping application, the lightmapping application configured to generate lighting data for application to said at least one 3D model; and importing the lighting data and apply lighting to said at least one 3D model based on the lighting data.

### BRIEF DESCRIPTION OF THE FIGURES

Reference will now be made, by way of example, to the accompanying drawings, of which:
Figure 1 is a schematic diagram of a computing system for design development embodying the present invention;
Figure 2 is a schematic diagram of a computing system for design development embodying the present invention;
Figure 3 is a schematic diagram of a computing system for design development embodying the present invention;
Figure 4 is a schematic diagram useful for understanding a running example;
Figure 5 is a schematic useful for understanding how correspondence between designs is achieved;
Figure 6 is a schematic diagram of an example method or workflow which may be implemented by first and second design applications D1 and D2 in combination;
Figure 7 is an example display of the first design application D1;
Figure 8 is an example display of the second design application D2;
Figure 9 is a schematic diagram of an example method or workflow which may be implemented by the second design application D2; and
Figure 10 is a block diagram of a computing device, which may serve as any of the computers of Figures 1 to 3.

### SPECIFIC DESCRIPTION

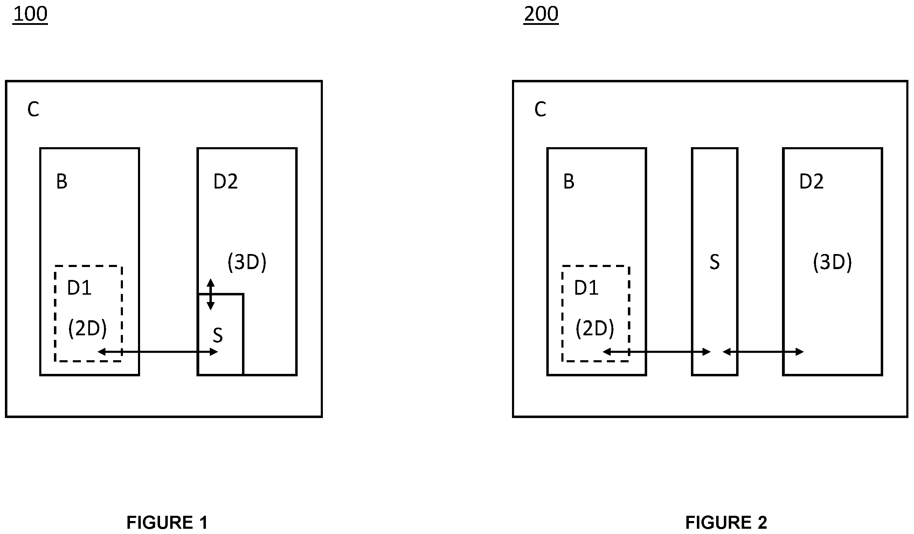

**Figure 1** is a schematic diagram of a computing system 100 for design development embodying the present invention. The system 100 comprises a computer C which itself comprises a browser B (e.g., a web browser or internet browser), a first design application D1 and a second design application D2.

The browser B is configured to run on the computer C as a native application of that computer C. The first design application D1 is configured to run within the browser B and handle a representation of a first design, and is represented by a dashed box to indicate that it is configured to run within the browser rather than as a native application of the computer C. The second design application D2 configured to run on the computer C as a native application of that computer C and is configured to handle a representation of a second design. The second design application D2 is also shown as comprising a server S. The representations may be considered data representations of their respective designs, which may be generated/stored in memory (e.g. random-access memory or RAM) at runtime. The memory used at runtime may be referred to as runtime memory. Such data representations may be exported as data files if desired.

Runtime may be understood as the period of time when an application or program is running or being executed. It begins when a program is opened (or executed) and ends with the program is quit or closed. When a program is in the runtime phase, the application may be loaded into RAM (random-access memory).

**Figure 2** is a schematic diagram of a computing system 200 for design development embodying the present invention. The system 200 is the same as the system 100 except that the server S is a separate component of the computer C from the second design application D2, and for example is a native application of the computer C like the browser B and the second design application D2.

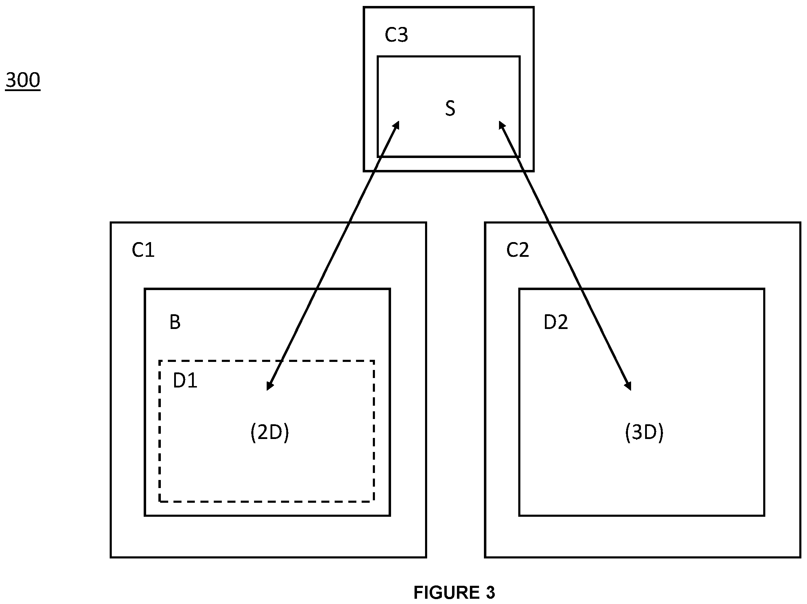

**Figure 3** is a schematic diagram of a computing system 300 for design development embodying the present invention. The system 300 is the same as the system 200 except that the browser B, the second design application D2 and the server S are provided in separate computers C1 to C3, respectively, as native applications of those respective computers. In another arrangement, the computers C2 and C3 could be provided as a single computer, with the second design application D2 running on that computer as a client of the server S.

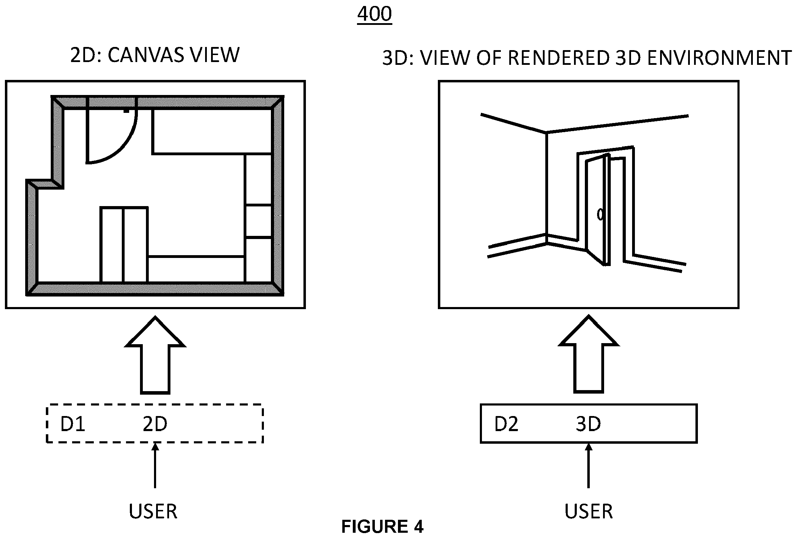

**Figure 4** is a schematic diagram 400 useful for understanding a running example, involving the design of a kitchen, which may be applied to any of the systems 100, 200, 300.

In the running example, the first design application D1 is a two-dimensional (2D) application as indicated. The representation of the first design is a 2D data representation and the first design application D1 is configured to display the first design based on the representation of the first design by 2D rendering, vector-based rendering and/or canvas rendering. With this in mind, the first design application D1 is represented in the lower half of Figure 4 as controlling a display in the upper half of Figure 4, which in this case presents a plan view of the first design, being a kitchen design, by canvas rendering.

Given that the first and second designs are both kitchen designs, the systems 100, 200, 300 may be referred to as a system for 3D design development, and both of the first and second designs may be referred to as 3D designs, even though the first design application D1 is configured to display the first design by 2D rendering, vector-based rendering and/or canvas rendering.

Also in the running example, the second design application D2 is a 3D design application as indicated. In the running example, the representation of the second design is a 3D data representation defining a 3D environment comprising at least one 3D model, and the second design application D2 is configured to display the second design based on the representation of the second design by 3D rendering. The 3D environment may be configured as (and referred to as) a VR or AR environment depending on the use case. With this in mind, the second design application D2 is also represented in the lower half of Figure 4 as controlling a display in the upper half of Figure 4, which in this case presents a VR view of the second design, again being a kitchen design, by 3D rendering.

It may be apparent that the display controlled by second design application D2 presents a VR view corresponding to a portion of the plan view presented in the display controlled by the first design application. In this respect, it may be that the second design is the same as, similar to or corresponds to the first design, in that both represent the same kitchen design but in different ways. Such correspondence (including similarity and/or identity) between the first and second designs will be considered in more detail later.

Considering the VR view of Figure 4, the second design application D2 may be configured to display the design by rendering the 3D environment based on a (virtual) camera position and orientation defined in, or relation to, the 3D environment such that the displayed view of the 3D environment is determined by the camera position and orientation. The rendering may be carried out on a frame-by-frame basis, so that the displayed view is re-rendered or refreshed from time to time or at a configured frame rate, such as at 50 or 60 frames per second. In this way, if there are any changes to the 3D environment (including to the camera position or lighting, or to the objects/models as a design is updated) the displayed view will change too. For example, the camera position and/or orientation may change over time, e.g. based on an input such as a user input, and the displayed view may update in real time as the camera position and/or orientation changes.

As indicated in Figure 4, a user may interact with or control the first design application D1 to update the first design, thus updating the plan view of the first design. Similarly, a user may interact with or control the second design application D2 to update the second design, thus updating the VR view or displayed view of the second design (independent of any change to the camera position and/or orientation, i.e. based on the re-rendering of the 3D environment as mentioned above). The user interacting with the second design application D2 may be the same as or different from the user interacting with the first design application. In some cases, it may be that a user interacts with only one of the first and second design applications D1, D2. The system 100, 200 or 300 may be configured to maintain correspondence between the first and second designs when either one or both of those designs are updated by a user, and this will be considered later herein.

The first design application D1, being configured to run with the browser B, may be a network-deployed design application. This may be particularly appropriate where the first design application D1 is for example a 2D design application as in the running example, and can run effectively in the browser environment. Looking at Figures 1 to 3, the browser B may be configured via a hyperlink or otherwise to download source code for the first design application D1 from an external repository via a network (not shown) and to compile the source code to generate the first design application D1. Advantageously, it may be ensured that an up-to-date or current version of the first design application D1 is employed whenever it is used. Multiple instances of the first design application D1 may be used by multiple users, with those instances being up-to-date or current versions of the first design application D1.

The second design application D2, being configured to run as a native application of the computer C or C2 on which it is installed, may be configured to take advantage of processing capabilities of the computer itself and which are not available within the browser environment. This may be particularly appropriate where the second design application D2 is e.g. a 3D design application as in the running example, and may need the processing capabilities of the computer itself.

In other examples, the first design application D1 may be a 3D application and the second design application D2 may be a 2D design application, or both design applications may be 2D applications, or both design applications may be 3D applications.

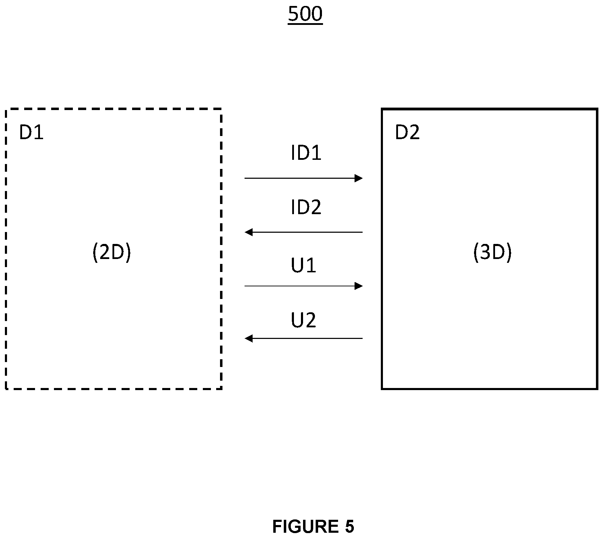

**Figure 5** is a schematic diagram 500 useful for understanding how the correspondence between the first and second designs is achieved.

The first design application D1 is represented on the left-hand side of Figure 5 and the second design application D2 is represented on the right-hand side. A number of example communications between those applications are represented in the middle.

In overview, at least one of the first and second design applications D1, D2 is configured, at runtime and in real time as a user of that one of those applications updates the representation of the design of that one of those applications to update that design to communicate the update via the server S (not shown in Figure 5) to the other one of those applications. At least the other one of the first and second design applications D1, D2 is configured, at runtime and in real time as the update is received, to apply the update to the representation of the design of that other one of those applications to update that design.

In a concrete example, the first design application D1 is configured, at runtime and in real time as a user of the first design application D1 updates the representation of the first design to update the first design, to communicate that update U1 via the server (not shown) to the second design application D2. The second design application D2 is configured, at runtime and in real time as the update U1 is received from the first design application D1, to apply the update U1 to the representation of the second design to update the second design. In this way, for example where the first and second designs correspond to one another before the update U1, the second design may continue to correspond to the first design.

In another concrete example, the second design application D2 is configured, at runtime and in real time as a user of the second design application D2 updates the representation of the second design to update the second design, to communicate that update U2 via the server S (not shown in Figure 5) to the first design application D1. The first design application D1 is configured, at runtime and in real time as the update U2 is received from the second design application D2, to apply the update U2 to the representation of the first design to update the first design. In this way, for example where the first and second designs correspond to one another before the update U2, the second design may continue to correspond to the first design.

In order to generate an initial correspondence between the first and second designs, the first design application D1 may be configured, based on the representation of the first design, to generate an initial definition ID1 for the second design application to employ to generate the representation of the second design so that the second design corresponds to (or is substantially the same as) the first design, and to communicate the initial definition ID1 to the second application D2. In such an example, the second design application D2 may be configured to generate the representation of the second design based on the initial definition ID1 such that the second design corresponds to (or is substantially the same as) the first design.

Similarly, in order to generate an initial correspondence between the first and second designs, the second design application D2 may be configured, based on the representation of the second design, to generate an initial definition ID2 for the first design application to employ to generate the representation of the first design so that the first design corresponds to (or is substantially the same as) the second design, and to communicate the initial definition ID2 to the first application D1. In such an example, the first design application D1 may be configured to generate the representation of the first design based on the initial definition ID2 such that the first design corresponds to (or is substantially the same as) the second design.

The initial definitions ID1 and ID2 may be a description of the design concerned, and similarly the updates U1 and U2 may be a description of a change to the design concerned. The initial definitions ID1 and ID2 and updates U1 and U2 may for example be in a human-readable text format such as a JSON (JavaScript Object Notation) or XM L (Extensible Markup Language) file. As another option, the initial definitions ID1 and ID2 and updates U1 and U2 could be in a memory-ready binary file format.

It will be understood that the first design application D1 is configured to run solely or wholly within the browser B, and/or independently of the second design application D2 but for the communication of updates U1, U2 or the initial definitions ID1, ID2. Put another way, the first design application D1 is configured to handle and update the representation of the first design independently and/or without assistance from the second design application D2, and/or the second design application D2 is configured to handle and update the representation of the second design independently and/or without assistance from the first design application D1. The first design application D1 may be considered entirely a frontend application (i.e. running on an end user's computer or machine). The second design application D2 may be considered entirely a frontend application (i.e. running on an end user's computer or machine, optionally a different machine from that running the first design application D1).

The first design application D1 may handle the representation of the first design in the sense that it controls, processes, manipulates, maintains, updates, or otherwise operates on that representation based on user inputs. Similarly, the second design application D2 may handle the representation of the second design in the sense that it controls, processes, manipulates, maintains, updates, or otherwise operates on that representation based on user inputs.

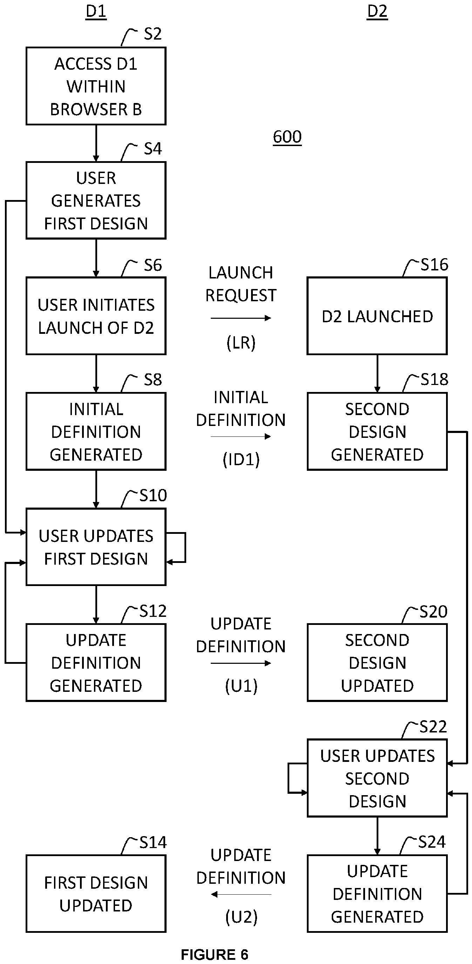

For a better understanding of Figure 5, **Figure 6** is a schematic diagram of an example method or workflow 600 which may be implemented by the first and second design applications D1 and D2 in combination.

Workflow 600 comprises even-numbered steps S2 to S14 shown on the left-hand side and carried out by the first design application D1 and S16 to S24 shown on the right-hand side and carried out by the second design application D2. Also shown, in the centre, are communications between the first and second design applications D1 and D2. It will become apparent that in some implementations not all of the steps shown need be carried out.

In step S2, the first design application D1 is accessed within the browser B. As mentioned above, if not already, this may involve the downloading of source code for the first design application D1 from an external repository via a network (not shown) and the compiling of the source code within the browser B to generate the first design application D1.

In step S4, the user employs the first design application D1 to generate the first design and thereby the corresponding representation of the first design. The first design may be displayed to the user in line with Figure 4. Step S4 may comprise any number of iterations of updating the first design and thus the corresponding representation of the first design.

In step S6, it is assumed that the user chooses to initiate launch of the second design application D2, for example by clicking a button or hyperlink in the display of the first design application D1. This triggers the first design application D1 to generate the initial definition ID1 as mentioned earlier. A launch request LR and the initial definition ID1 are then (potentially together) communicated to cause the second design application D2 to launch in step S16 based on the launch request LR and the second design to be generated in step S18 based on the initial definition ID1. Additionally, a connection is established between the first and second design applications D1 and D2 via the server S (not shown). Such an established connection may comprise a bidirectional or duplex connection, and/or a persistent connection, such as a WebSocket connection. Where the second design application D2 is a native application of the same computer C as is the browser B, the launch request LR and initial definition ID1 may take the form of a Magnet link. This may enable the second design application D2 (e.g. having the server S) to be launched when needed rather than having the server S always on and open.

Focussing on the first design application D1, the workflow 600 may proceed from step S4 directly to step S10, or via steps S6 and S8 if the second design application D2 is launched as mentioned above. In step S10, the user may further update the first design and thus the corresponding representation of the first design.

Where the second design application D2 has not been launched, step S10 may be repeated any number of times as indicated.

Where the second design application D2 has been launched and the connection between the first and second design applications D1 and D2 established as above, the workflow proceeds from step S10 to S12 as updates are made in which an update definition U1 reflecting the update to the first design is generated and communicated to the second design application D2 via the established connection. Thus, such update definitions U1 are generated and communicated to the second design application D2 in real time as the first design is updated. Each time an update definition U1 is received by the second design application D2, the second design is updated (by virtue of updating its representation in step S20) so that the second design continues to correspond to the first design. Thus, the second design is updated in real time as the first design is updated.

Of course, the level of granularity/frequency at which update definitions U1 are generated in step S12 and communicated to the second design application D2 so that the second design is updated (by virtue of updating its representation in step S20) may be configured dependent on the required "real time" experience of the user.

Focussing on the second design application D2, the workflow 600 may proceed from step S18 directly to step S22, or via any intervening iterations of step S20 if update definitions U1 are received. In step S22, the user (of the second design application D2) may update the second design and thus the corresponding representation of the second design.

In a case where the second design application D2 has been launched independently of the first design application D1, e.g. where the first design application D1 is not active, step S22 may be repeated any number of times as indicated.

Where the second design application D2 has been launched by the first design application D1 and the connection between the first and second design applications D1 and D2 established as above, the workflow proceeds from step S22 to S24 as updates are made in which an update definition U2 reflecting the update to the second design is generated and communicated to the first design application D1 via the established connection. Thus, such update definitions U2 are generated and communicated to the first design application D1 in real time as the second design is updated. Each time an update definition U2 is received by the first design application D1, the first design is updated (by virtue of updating its representation in step S14) so that the first design continues to correspond to the second design. Thus, the first design is updated in real time as the second design is updated.

Again, the level of granularity/frequency at which update definitions U2 are generated in step S24 and communicated to the first design application D1 so that the first design is updated (by virtue of updating its representation in step S14) may be configured dependent on the required "real time" experience of the user.

As above, it may be that not all of the steps shown need be carried out. For example, it may be that it is not possible for the user of the second design application D2 to update the second design by interacting with the second design application D2, and that the second design is updated instead by updating the first design in steps S10, S12 and S20. In that case, steps S22, S24 and S14 need not be provided.

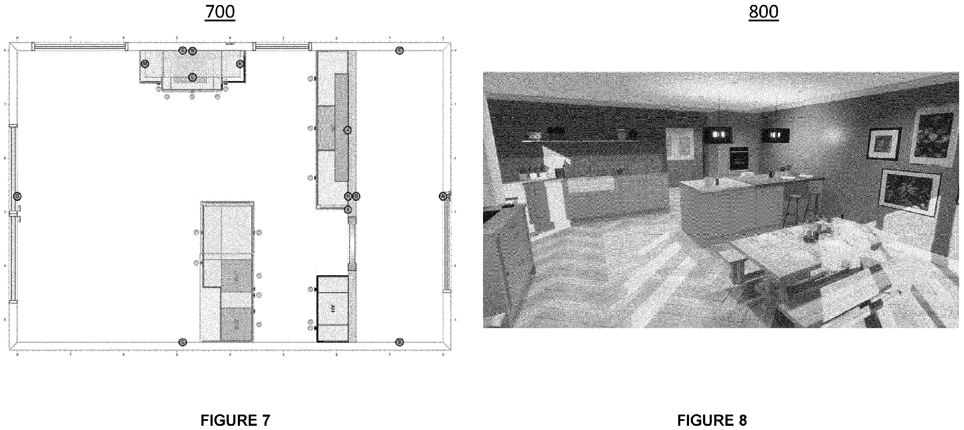

A specific use case will now be considered by way of example, in relation to the design of a kitchen, in connection with Figures 7 and 8. In line with the running example, it is assumed here that the first design application D1 is a two-dimensional (2D) application configured to display the first design based on the representation of the first design by canvas rendering, and the second design application D2 is a 3D design application configured to display the second design based on the representation of the second design as a VR environment by 3D rendering.

Referring back to Figure 6, in steps S2 and S4, the first design application D1 is accessed within the browser B, and is used by a user to generate the first design (i.e. a design of the kitchen) with its corresponding representation thereof (i.e. a data file). **Figure 7** is an example display (i.e. screenshot) 700, in the form of a GUI (Graphical User Interface), which may be generated by the first design application D1 and manipulated by the user to develop the first design.

Effectively, the display presents a plan blueprint, depicting elements of the kitchen design including the layout of walls, room fixtures (such as doors, windows and utility inlets) and components such as wall units, floor units, worktops, frontals and appliances. Every object inside the blueprint may be considered a serializable "widget".

Assuming the user chooses to employ the second design application D2, in step S8 the first design application D1 generates the initial definition ID1 as mentioned earlier. In this example, the first design application D1 serialises each widget into a JSON object and combines them in a JSON file (as an example of the initial definition ID1). Taking a single base unit of the kitchen design as an example, every detail about it which the second design application D2 will need to generate a corresponding VR environment (i.e. the second design) is included in the corresponding JSON object, including for example what type of base unit it is, where it is located, what style of door it has, what colour the carcase/door/drawers are, how big it is, etc.. The JSON file may include additional data such as a remote network location that the second design application D2 (i.e. VR application) can obtain assets from to build the corresponding VR environment (3D environment). In this context, assets may be considered pre-generated 3D models (e.g. of elements that may be included in the design, such as wall units, floor units, worktops, frontals and appliances), textures for application to model surfaces, and the like.

Looking back at Figure 6, once the second design application D2 has been launched in step S16 and has received or retrieved the JSON file in step S18, it will parse the JSON file and each widget from the JSON will become a "Planltem" object within the second design application D2. There may for example be subclasses of Planltem such as Unit, Worktop, Appliance, which objects are sorted into. Each has its own unique behaviour and data associated with it.

In the second design application D2, upon parsing the JSON file and building the appropriate object data in the second design application D2, the item factory class will begin assembling the objects in the correct locations. This may employ procedurally constructed assets, static assets (e.g. constructed in advance by an artist) or a combination of procedurally-constructed and static assets. Static assets (e.g. complicated objects, such as ovens) may be retrieved from local or remote storage. More dynamic objects, that are unique to the individual first design (plan blueprint), such as worktops or the shape of the room, may be constructed procedurally within the second design application D2.

An algorithm within the second design application D2 may decide the location for the user to start at (for viewing) within the VR environment (i.e. the camera location and orientation), for example, placing the user near a feature appliance or sink. As other options, a default starting location may be chosen or the user of the first design application may identify a starting location on the blueprint plan. Once every ItemObject has finished its construction process, the VR environment or scene is ready to be viewed via the display of the second design application D2, generated by 3D rendering. Such a 'scene' (or 3D virtual environment) may comprise the layout of 3D models with regards to the virtual or notional camera (having an associated 3D position and 3D vector defining the direction it is pointing in and thus the view of the user) and any light sources (which may also be defined in terms of position and orientation, and in terms of color/intensity etc.). **Figure 8** is an example display (i.e. screenshot) 800 of the second design application D2 depicting the second design (being a VR environment or scene corresponding to the same kitchen design as represented by the blueprint plan of Figure 7).

As such, it will be appreciated that the second design application D2 may be configured to generate the representation of the second design at runtime at least partly by procedural generation based on the initial definition concerned. Similarly, the second design application D2 may be configured to update the representation of the second design at runtime at least partly by procedural generation.

As above, it will be appreciated that the communicated updates U1, U2 and initial definitions ID1, ID2 may be in a predefined format known or accessible by the first and second design applications D1, D2.

Looking at Figures 7 and 8, an advantage of the methodology described in connection with Figures 5 and 6 is that the first and second designs can be kept in correspondence with one another in real time, by virtue of the communicated initial definitions ID1, ID2 (which enable the initial correspondence) and updates U1, U2 (which enable the correspondence to be retained).

Thus, the first design application D1 may be configured in real time to display the first design on a first display or display portion (see Figure 7) based on the representation of the first design, and the second design application D2 may be configured in real time to display the second design on a second display or display portion based on the representation of the second design. That is, the first and second design applications D1, D2 may be configured to display their designs based on their representations (data representations, e.g. in runtime memory such as RAM) concurrently or simultaneously, and in real time as their representations are being updated. Therefore, looking at Figures 1 to 3, although the first design application D1 is running in the browser B (and is restricted by the browser environment) and the second design application D2 is running as a native application (and e.g. using sophisticated hardware of its host computer) the user or users of those applications may advantageously have the illusion that they are interacting with a single application and single design.

Looking at Figure 8, the 3D models (computer graphics models) considered herein may be taken to be surface models (polygonal models, polygonal mesh models, shell models or boundary models), and to define the surface of the object concerned rather than its solid interior. Typically, such models use polygons to create a three-dimensional shape. The designed model is therefore composed of a plurality of polygons (or facets) that form a mesh (polygonal mesh, or triangulated mesh). Each polygon is composed of vertices, edges and faces. By assembling different polygons, the basic shape of the object (in the case of a kitchen, e.g. a wall unit or frontal such as cupboard door) is obtained, in the same way that the interlocking of six square polygons will form a cube. In practice, the objects may be built up of triangular polygons (i.e. planar triangles with coplanar vertices and straight edges). Each 3D model and portion of a 3D model may thus be defined as a mesh of polygons, in practice triangular polygons or simply triangles. The user can for example move edges and points in space to deform a model under construction to arrive at the desired 3D shape. 3D models, or 3D computer graphics models, in this sense are mathematical representations of 3D objects (geometric data) for use by a computer for the purposes of performing calculations and rendering. Rendering of 3D models ('3D rendering') may generate 2D images for display (such as on a computer monitor or display - see Figure 8).

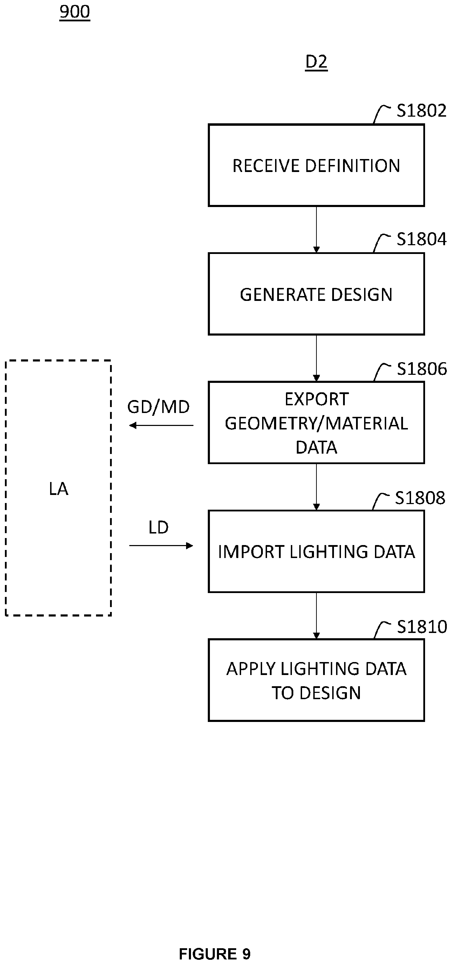

**Figure 9** is a schematic diagram of an example method or workflow 900 which may be implemented by the second design application D2, for example when generating the second design in step S18 of workflow 600. For ease of understanding, it will be assumed that (as in workflow 600) the second design application D2 receives the initial definition ID1 from the first design application D1. However, the initial definition ID1 may be obtained by the second design application D2 from local or external storage, for exam ple.

Workflow 900 comprises even-numbered steps S1802 to S1810, which may be considered to collectively correspond to step S18 in workflow 600 of Figure 6.

In step S1802, the initial definition ID1 is received and in step S1804 the second design is generated (i.e. the data representation thereof, in runtime memory) based on the initial definition ID1, as before. In step S1806, however, the second design application D2 is configured, at runtime, to export geometric data GD, or geometric data GD and material data MD, describing the 3D environment and/or at least one 3D model (or some or all 3D models) of the second design (defined by the representation of the second design) to a lightmapping application LA. The geometric data GD may be considered to define the geometry of the 3D environment and/or at least one 3D model (or some or all 3D models) of the second design. The material data MD may be considered to define materials of surfaces of the 3D environment and/or at least one 3D model (or some or all 3D models) of the second design.

The lightmapping application LA - also indicated in Figure 9 for ease of understanding - may be a native application of the same computer as the second design application D2 or may be remotely hosted (and accessed via a network such as the Internet).

The lightmapping application LA is configured to generate lighting data LD for application to the at least one 3D model of the second design, based on the geometric data GD, or geometric data GD and material data MD and to return that lighting data to the second design application D2. The geometric data GD may comprise or be accompanied by configuration data defining at least a desired lighting configuration, such as a location/type/colour/intensity of at least one light source (within the 3D environment, i.e. relative to the at least one 3D model).

In step 1808, therefore, the second design application D2 is configured, at runtime, to import the lighting data LD and, in step 1810, to apply lighting to the at least one 3D model based on the lighting data LD. This applied lighting may be appreciated by the user when the second design is displayed by 3D rendering. This application of lighting to the at least one 3D model may comprise "baking" (incorporating) the lighting data into textures which are applied to surfaces of the at least one 3D model when displaying the second design by 3D rendering.

The second design application D2 may be configured, at runtime, to trigger steps 1804, 1806, 1808 and 1810 (i.e. to cause them to automatically occur, one after the next) upon receipt of the initial definition ID1 in step 1802, so that the lighting is applied to the at least one 3D model (or some or all 3D models) of the second design without the user of the second design application D2 needing to take any action, and thereby providing the user with a more realistic looking VR environment.

It is reiterated that the second design application D2 here is handling a 3D environment and is configured to display the second design by rendering the 3D environment concerned based on a defined camera position and orientation as mentioned earlier. Thus, looking at Figures 4 and 8, the displayed view is determined by the camera position and orientation. The displayed view is repeatedly re-rendered, e.g. on a frame-by-frame basis, as mentioned earlier. Moreover, the displayed view updates in real time as the camera position and/or orientation changes. The lighting in the displayed view also updates (independently of the camera position/orientation) as the lighting data LD is obtained and applied as mentioned above, i.e. based on the re-rendering.

The first and second design applications D1, D2 may be provided as a suite of computer programs for design development, for example on a computer readable medium. Of course, the first and second design applications D1, D2 may be provided individually on separate computer readable media.

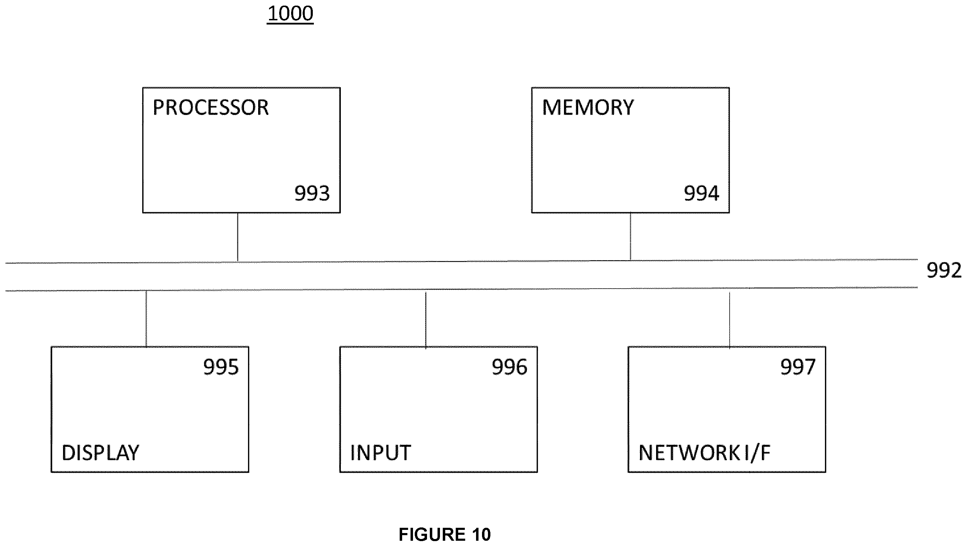

**Figure 10** is a block diagram of a computing device, which may serve as any of the computers C, C1, C2 of Figures 1 to 3, and which may be used to implement any of the methods disclosed herein. The computing device comprises a processor 993, and memory, 994. Optionally, the computing device also includes a network interface 997 for communication with other computing devices, for example with other computing devices to provide computers C1 and C2 of Figure 3.

For example, an embodiment may be composed of a network of such computing devices. Optionally, the computing device also includes one or more input mechanisms such as keyboard and mouse 996, and a display unit such as one or more monitors 995. The components are connectable to one another via a bus 992.

The memory 994 may include a computer readable medium, which term may refer to a single medium or multiple media (e.g., a centralized or distributed database and/or associated caches and servers) configured to carry computer-executable instructions or have data structures stored thereon. Computer-executable instructions may include, for example, instructions and data accessible by and causing a general purpose computer, special purpose computer, or special purpose processing device (e.g., one or more processors) to perform one or more functions or operations. Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing code stored in the memory to implement the various different functions of the methods, modules, units, and applications described here and in the claims. The memory 994 stores data being read and written by the processor 993. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and steps discussed herein.

The display unit 997 may display a representation of data stored by the computing device and may also display a cursor and dialog boxes and screens enabling interaction between a user and the programs and data stored on the computing device. The input mechanisms 996 may enable a user to input data and instructions to the computing device.

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc may be included in the computing device.

In any of the above aspects, the various features may be implemented in hardware, or as software modules running on one or more processors/computers. References herein to applications may be understood as references to computer applications, software applications, computer programs and/or software.

The invention also provides a computer program or a computer program product comprising instructions which, when executed by a computer, cause the computer to carry out any of the methods/method steps described herein, and a non-transitory computer-readable medium comprising instructions which, when executed by a computer, cause the computer to carry out any of the methods/method steps described herein. A computer program embodying the invention may be stored on a non-transitory computer-readable medium, or it could, for example, be in the form of a signal such as a downloadable data signal provided from an Internet website, or it could be in any other form.

In general, the various exemplary embodiments may be implemented in hardware or special purpose circuits, software, logic or any combination thereof. For example, some aspects may be implemented in hardware, while other aspects may be implemented in firmware or software which may be executed by a controller, microprocessor or other computing device, although the disclosure is not limited thereto. While various aspects of the exemplary embodiments of this disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As such, it should be appreciated that at least some aspects of the exemplary embodiments of the disclosure may be practiced in various components such as integrated circuit chips and modules. It should thus be appreciated that the exemplary embodiments of this disclosure may be realized in an apparatus that is embodied as an integrated circuit, where the integrated circuit may comprise circuitry (as well as possibly firmware) for embodying at least one or more of a data processor, a digital signal processor, baseband circuitry and radio frequency circuitry that are configurable so as to operate in accordance with the exemplary embodiments of this disclosure.

It should be appreciated that at least some aspects of the exemplary embodiments of the disclosure may be embodied in computer-executable instructions, such as in one or more program modules, executed by one or more computers or other devices. Generally, program modules include routines, programs, objects, components, data structures, etc. that perform particular tasks or implement particular abstract data types when executed by a processor in a computer or other device. The computer executable instructions may be stored on a computer readable medium such as a hard disk, optical disk, removable storage media, solid state memory, RAM, etc. As will be appreciated by one of skill in the art, the function of the program modules may be combined or distributed as desired in various embodiments. In addition, the function may be embodied in whole or in part in firmware or hardware equivalents such as integrated circuits, field programmable gate arrays (FPGA), and the like.

References in the present disclosure to "one embodiment", "an embodiment" and so on, indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to implement such feature, structure, or characteristic in connection with other embodiments whether or not explicitly described.

It should be understood that, although the terms "first", "second" and so on may be used herein to describe various elements, these elements should not be limited by these terms. These terms are only used to distinguish one element from another. For example, a first element could be termed a second element, and similarly, a second element could be termed a first element, without departing from the scope of the disclosure. As used herein, the term "and/or" includes any and all combinations of one or more of the associated listed terms.

The terminology used herein is for the purpose of describing particular embodiments only and is not intended to limit the present disclosure. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components, but do not preclude the presence or addition of one or more other features, elements, components and/ or combinations thereof. The terms "connect", "connects", "connecting" and/or "connected" used herein cover the direct and/or indirect connection between two elements.

The present disclosure includes any novel feature or combination of features disclosed herein either explicitly or any generalization thereof. Various modifications and adaptations to the foregoing exemplary embodiments of this disclosure may become apparent to those skilled in the relevant arts in view of the foregoing description, when read in conjunction with the accompanying drawings. However, any and all modifications will still fall within the scope of the non-limiting and exemplary embodiments of this disclosure.

The present invention may be embodied in many different ways in the light of the above disclosure, within the spirit and scope of the appended claims.

The present disclosure extends to the following statements.

### A.

A1. A computing system for design development comprising at least one computer, wherein:
   a browser is configured to run on a given computer of the system as a native application of said given computer;
   a first design application is configured to run within the browser and handle a representation of a first design;
   a second design application is configured to run on said given computer or on another computer of the system as a native application of the computer concerned and handle a representation of a second design;
   at least one of the first and second design applications is configured, at runtime and in real time as a user of that one of those applications updates the representation of the design of that one of those applications to update that design, to communicate the update via a server to the other one of those applications; and
   at least the other one of the first and second design applications is configured, at runtime and in real time as the update is received, to apply the update to the representation of the design of that other one of those applications to update that design.
A2. The system according to statement A1, wherein:
   the first design application is configured to establish a connection to the second design application via the server or the second design application is configured to establish a connection to the first design application via the server; and
   the at least one of the first and second design applications is configured to communicate the update to the other one of those applications via the established connection,
   optionally wherein said established connection comprises:
      a bidirectional or duplex connection; and/or
      a persistent connection, such as a WebSocket connection.
A3. The system according to statement A1 or A2, wherein:
   the first design application is configured, based on the representation of the first design, to generate an initial definition for the second design application to employ to generate the representation of the second design so that the second design corresponds to or is substantially the same as the first design, and to communicate the initial definition to the second application via the server and/or via the established connection; and
   the second design application is configured to generate the representation of the second design based on the initial definition such that the second design corresponds to or is substantially the same as the first design.
A4. The system according to statement A3, wherein the second design application is configured to generate the representation of the second design at runtime at least partly by procedural generation based on the initial definition.
A5. The system according to any of the preceding statements, wherein the communicated update and/or the initial definition is in a predefined format known or accessible by the first and second design applications.
A6. The system according to any of the preceding statements, wherein the first design application is configured to initiate launch of the second design application via the server, optionally via a Magnet link.
A7. The system according to any of the preceding statements, wherein:
   the first design application is a network-deployed design application; and
   the browser is configured to download source code for the first design application from an external repository via a network and to compile the source code to generate the first design application.
A8. The system according to any of the preceding statements, wherein:
   the first design application is configured to run solely or wholly within the browser, and/or independently of the second design application but for the communication of updates; and/or
   the first design application is configured to handle and update the representation of the first design independently and/or without assistance from the second design application; and/or
   the second design application is configured to handle and update the representation of the second design independently and/or without assistance from the first design application.
A9. The system according to any of the preceding statements, wherein:
   the second design application comprises said server; or
   said server is separate from the second design application and optionally separate from the computer configured to run the second design application; or
   said another computer of the system is or comprises said server and the second design application is configured to run on that computer as a client of the server.
A10. The system according to any of the preceding statements, wherein:
   the first design application is configured, at runtime and in real time as a user of the first design application updates the representation of the first design to update the first design, to communicate that update via the server to the second design application; and
   the second design application is configured, at runtime and in real time as the update is received from the first design application, to apply the update received from the first design application to the representation of the second design to update the second design, optionally such that the second design corresponds to or is substantially the same as the first design.
A11. The system according to any of the preceding statements, wherein:
   the second design application is configured, at runtime and in real time as a user of the second design application updates the representation of the second design to update the second design, to communicate that update via the server to the first design application; and
   the first design application is configured, at runtime and in real time as the update is received from the second design application, to apply the update received from the second design application to the representation of the first design to update the first design, optionally such that the first design corresponds to or is substantially the same as the second design.
A12. The system according to any of the preceding statements, wherein:
   the system is for 3D design development; and
   the first and second designs are 3D designs, such as designs for a room such as a kitchen.
A13. The system according to any of the preceding statements, wherein:
   the first design application is a 2D design application;
   the representation of the first design is a 2D data representation, optionally comprising or referencing a 2D data file or another 2D data representation; and
   the first design application is configured to display the first design based on the representation of the first design by 2D rendering, vector-based rendering and/or canvas rendering.
A14. The system according to any of the preceding statements, wherein:
   the second design application is a 3D design application;
   the representation of the second design is a 3D data representation, optionally comprising or referencing a 3D data file or another 3D data representation, defining a 3D environment comprising at least one 3D model; and
   the second design application is configured to display the second design based on the representation of the second design by 3D rendering.
A15. The system according to statement A14, wherein the second design application is configured, at runtime, to:
   export geometric data, or geometric data and material data, describing the at least one 3D model of the second design defined by the representation of the second design to a lightmapping application, the lightmapping application configured to generate lighting data for application to said at least one 3D model; and
   import the lighting data and apply lighting to said at least one 3D model based on the lighting data, and optionally display said lighting when displaying the second design by 3D rendering,
   optionally wherein:
      the system comprises the lightmapping application and the lightmapping application is configured to run on a computer of the system; and/or
      the geometric data defines the geometry of the at least one 3D model of the second design; and/or
      the material data defines materials of surfaces of the at least one 3D model of the second design; and/or
      applying lighting to said at least one 3D model based on the lighting data comprises, at runtime, baking or incorporating the lighting data into textures which are applied to surfaces of said at least one 3D model when displaying the second design by 3D rendering.
A16. The system according to statement A15, wherein the second design application is configured, at runtime, to trigger, upon receipt of an initial definition from the first design application for generation of the representation of the second design,:
   generation of the representation of the second design based on the initial definition at least partly by procedural generation;
   the export of the geometric data, or the geometric data and the material data; and
   the import of the lighting data and application of the lighting to said at least one 3D model based on the lighting data.
A17. The system according to any of the preceding statements, comprising:
   a first display or display portion; and
   a second display or display portion,
   wherein:
      the first design application is configured in real time to display the first design on the first display or display portion based on the representation of the first design, optionally by repeatedly rendering or re-rendering the representation of the first design; and
      the second design application is configured in real time to display the second design on the second display or display portion based on the representation of the second design, optionally by repeatedly rendering or re-rendering the representation of the second design.
A18. The system according to any of the preceding statements, wherein:
   the first and second design applications are configured to display their designs based on their representations concurrently or simultaneously; and/or
   the first and second design applications are configured to display their designs based on their representations in real time as their representations are being updated.
A19. A suite of computer programs for design development, the suite comprising:
   a first design application configured to run within a browser and handle a representation of a first design; and
   a second design application configured to run as a native application of a computer and handle a representation of a second design,
   wherein:
      at least one of the first and second design applications is configured, at runtime and in real time as a user of that one of those applications updates the representation of the design of that one of those applications to update that design, to communicate the update via a server to the other one of those applications; and
      at least the other one of the first and second design applications is configured, at runtime and in real time as the update is received, to apply the update to the representation of the design of that other one of those applications to update that design.
A20. A computer readable medium having the suite of computer programs of statement A19 stored thereon.
A21. A computer-implemented method for design development, comprising:
   running a browser on a given computer of a system as a native application of said given computer;
   running a first design application within the browser, the first design application configured to handle a representation of a first design;
   running a second design application on said given computer or on another computer of the system as a native application of the computer concerned, the second design application configured to handle a representation of a second design;
   employing at least one of the first and second design applications, at runtime and in real time as a user of that one of those applications updates the representation of the design of that one of those applications to update that design, to communicate the update via a server to the other one of those applications; and
   employing at least the other one of the first and second design applications, at runtime and in real time as the update is received, to apply the update to the representation of the design of that other one of those applications to update that design.
A22. The method according to statement A21, wherein the first design application is a network-deployed design application, the method comprising:
   employing the browser to download source code for the first design application from an external repository via a network and to compile the source code to generate the first design application.

### B.

B1. A 3D design application configured to handle a representation of a design, wherein:
   the representation is a 3D data representation defining a 3D environment comprising at least one 3D model; and
   the 3D design application is configured, at runtime, to:
   export geometric data, or geometric data and material data, describing the 3D environment and/or the at least one 3D model to a lightmapping application, the lightmapping application configured to generate lighting data for application to said at least one 3D model; and
   import the lighting data and apply lighting to said at least one 3D model based on the lighting data.
B2. The 3D design application according to statement B1, configured to:
   display the design based on the representation by 3D rendering; and/or
   display the design, with said lighting applied to the at least one 3D model; and/or
   display the design, without having said lighting applied to the at least one 3D model, optionally prior to the export of the geometric data, or the geometric data and the material data, to the lightmapping application.
B3. The 3D design application according to statement B1 or B2, configured to:
   display the design by rendering the 3D environment based on a camera position and orientation defined in, or relation to, the 3D environment such that a displayed view of the 3D environment is determined by the camera position and orientation; and
   update the displayed view in real time as the camera position and/or orientation changes, and/or update the displayed view by repeatedly rendering or re-rendering the 3D environment.
B4. The 3D design application according to any of the preceding statements, wherein:
   the geometric data defines the geometry of the 3D environment and/or the at least one 3D model; and/or
   the material data defines materials of surfaces of the 3D environment and/or the at least one 3D model; and/or
   applying lighting to said at least one 3D model based on the lighting data comprises, at runtime, baking or incorporating the lighting data into textures which are applied to surfaces of said at least one 3D model when displaying the design, optionally wherein said textures form part of said 3D data representation.
B5. The 3D design application according to any of the preceding statements, configured to generate the representation of the design at runtime at least partly by procedural generation.
B6. The 3D design application according to statement B5, configured to generate the representation of the design at runtime at least partly by procedural generation based on a definition of at least part of the 3D environment received by the 3D design application from an external source at runtime.
B7. The 3D design application according to statement B6, configured, at runtime, to trigger, upon receipt of said definition at runtime:
   generation of the representation of the design based on the definition at least partly by procedural generation;
   the export of the geometric data, or the geometric data and the material data; and
   the import of the lighting data and application of the lighting to said at least one 3D model based on the lighting data.
B8. A 3D design system comprising computing apparatus configured to run the 3D design application according to any of the preceding statements.
B9. A computer readable medium having the 3D design application according to any of statements B1 to B7 stored thereon.
B10. A computer-implemented method of handling a representation of a design, wherein the representation is a 3D data representation defining a 3D environment comprising at least one 3D model, the method comprising, at runtime,:
   exporting geometric data, or geometric data and material data, describing the 3D environment and/or the at least one 3D model to a lightmapping application, the lightmapping application configured to generate lighting data for application to said at least one 3D model; and
   importing the lighting data and apply lighting to said at least one 3D model based on the lighting data.

## Claims

1. A 3D design application configured to handle a representation of a design, wherein:
the representation is a 3D data representation defining a 3D environment comprising at least one 3D model; and
the 3D design application is configured, at runtime, to:
export geometric data, or geometric data and material data, describing the 3D environment and/or the at least one 3D model to a lightmapping application, the lightmapping application configured to generate lighting data for application to said at least one 3D model; and
import the lighting data and apply lighting to said at least one 3D model based on the lighting data.

2. The 3D design application according to claim 1, configured to:
display the design based on the representation by 3D rendering; and/or
display the design, with said lighting applied to the at least one 3D model; and/or
display the design, without having said lighting applied to the at least one 3D model, optionally prior to the export of the geometric data, or the geometric data and the material data, to the lightmapping application.

3. The 3D design application according to claim 1 or 2, configured to:
display the design by rendering the 3D environment based on a camera position and orientation defined in, or relation to, the 3D environment such that a displayed view of the 3D environment is determined by the camera position and orientation; and
update the displayed view in real time as the camera position and/or orientation changes, and/or update the displayed view by repeatedly rendering or re-rendering the 3D environment.

4. The 3D design application according to any of the preceding claims, wherein:
the geometric data defines the geometry of the 3D environment and/or the at least one 3D model; and/or
the material data defines materials of surfaces of the 3D environment and/or the at least one 3D model; and/or
applying lighting to said at least one 3D model based on the lighting data comprises, at runtime, baking or incorporating the lighting data into textures which are applied to surfaces of said at least one 3D model when displaying the design, optionally wherein said textures form part of said 3D data representation.

5. The 3D design application according to any of the preceding claims, configured to generate the representation of the design at runtime at least partly by procedural generation.

6. The 3D design application according to claim 5, configured to generate the representation of the design at runtime at least partly by procedural generation based on a definition of at least part of the 3D environment received by the 3D design application from an external source at runtime.

7. The 3D design application according to claim 6, configured, at runtime, to trigger, upon receipt of said definition at runtime:
generation of the representation of the design based on the definition at least partly by procedural generation;
the export of the geometric data, or the geometric data and the material data; and
the import of the lighting data and application of the lighting to said at least one 3D model based on the lighting data.

8. A 3D design system comprising computing apparatus configured to run the 3D design application according to any of the preceding statements.

9. A computer readable medium having the 3D design application according to any of claims 1 to 7 stored thereon.

10. A computer-implemented method of handling a representation of a design, wherein the representation is a 3D data representation defining a 3D environment comprising at least one 3D model, the method comprising, at runtime,:
exporting geometric data, or geometric data and material data, describing the 3D environment and/or the at least one 3D model to a lightmapping application, the lightmapping application configured to generate lighting data for application to said at least one 3D model; and
importing the lighting data and apply lighting to said at least one 3D model based on the lighting data.
